Europäisches Patentamt

European Patent Office

Office européen des brevets

(19)

(11) EP 1 024 114 B1

(12) **FASCICULE DE BREVET EUROPEEN**

(45) Date de publication et mention
de la délivrance du brevet:
**02.05.2003 Bulletin 2003/18**

(51) Int Cl.⁷: **C01G 43/025**, B01J 8/00,
C01B 13/30

(21) Numéro de dépôt: **00400177.2**

(22) Date de dépôt: **24.01.2000**

(54) **Système de transfert de chaleur pour réacteur de conversion d'UF6 en oxyde d'uranium**

System für Wärmeübertragung in einem Reaktor für die Umsetzung von UF6 in Uranoxid

System for heat transfer in a reactor for the conversion of UF6 to uranium oxide

(84) Etats contractants désignés:
**DE GB NL**

(30) Priorité: **27.01.1999 FR 9900870**

(43) Date de publication de la demande:
**02.08.2000 Bulletin 2000/31**

(73) Titulaire: **COMPAGNIE GENERALE DES
MATIERES NUCLEAIRES
78140 Velizy Villacoublay (FR)**

(72) Inventeurs:
 • **Delestre, André
 07700 Bourg Saint Andeol (FR)**
 • **Delteil, Jean
 26700 Pierrelatte (FR)**

 • **Dirand, Daniel
 26700 Pierrelatte (FR)**
 • **Fanti, Pierre
 84100 Orange (FR)**
 • **Martinand, Michel
 26130 Saint Paul Trois Châteaux (FR)**

(74) Mandataire: **Poulin, Gérard et al
Société BREVATOME
3, rue du Docteur Lancereaux
75008 Paris (FR)**

(56) Documents cités:
EP-A- 0 230 087    WO-A-98/30500
US-A- 3 978 194    US-A- 4 518 569
US-A- 5 752 158

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un système de transfert de chaleur pour réacteur de conversion de l'hexafluorure d'uranium $UF_6$ en oxyde d'uranium, en particulier en oxyde $UO_2$. Ce système peut fonctionner comme refroidisseur ou comme réchauffeur selon les circonstances.

## Etat de la technique antérieure

L'uranium enrichi provenant des usines de séparation isotopique se présente en général sous forme d'hexafluorure $UF_6$. Cet hexafluorure doit être généralement transformé en poudre d'oxyde $UO_2$ qui, pour être frittable, doit présenter un certain nombre de propriétés physiques. Il existe divers procédés permettant d'obtenir du bioxyde d'uranium $UO_2$ de qualité convenant au frittage à partir de l'hexafluorure.

Un procédé de conversion intéressant consiste à passer par le composé intermédiaire $UO_2F_2$. L'hexafluorure est transformé en oxyfluorure à l'issue de la réaction suivante :

$$UF_6 + 2H_2O \rightarrow UO_2F_2 + 4HF$$

l'eau étant fournie sous forme de vapeur. On peut obtenir de l'oxyfluorure extrêmement réactif en diluant très fortement la vapeur d'eau avec de l'air ou de l'azote.

On obtient de l'oxyde $UO_2$ à l'issue de la deuxième phase du procédé, par la réaction suivante :

$$UO_2F_2 + H_2 \rightarrow UO_2 + 2HF$$

Pour obtenir de l'oxyde $UO_2$ frittable, on peut réaliser une hydrolyse réductrice de $UO_2F_2$ par de la vapeur d'eau en présence d'hydrogène qui peut être fourni par de l'ammoniac craqué.

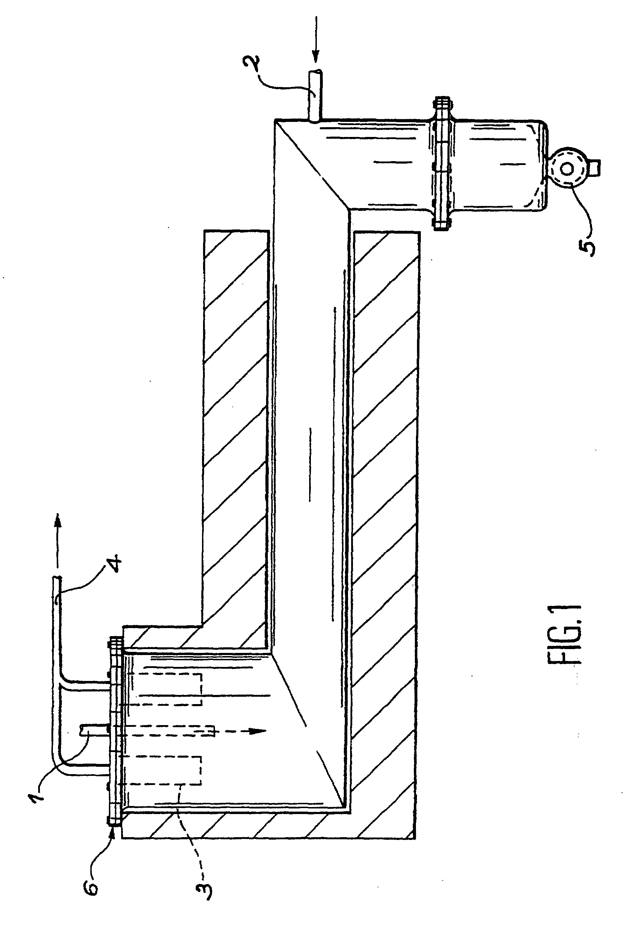

Le document FR-A-2 060 242 divulgue un procédé de fabrication d'oxyde d'uranium frittable à partir d'hexafluorure d'uranium selon lequel on fait réagir de l'hexafluorure d'uranium gazeux avec de la vapeur d'eau à une température supérieure à 100°C, on soustrait immédiatement l'oxyfluorure provenant de la réaction à l'action de l'hexafluorure et on transforme l'oxyfluorure en oxyde d'uranium. Ce procédé peut être mis en oeuvre dans le dispositif représenté à la figure 1 ci-jointe.

Le dispositif schématisé à la figure 1 est constitué par un four dont l'enceinte présente une forme en S. Les produits de la réaction parcourent successivement dans le four plusieurs zones portées à des températures différentes et ajustables par des moyens de chauffage non représentés et disposés sur la partie horizontale du four. L'$UF_6$, ainsi éventuellement que la vapeur d'eau et l'azote, suivant qu'on opère à co-courant ou à contre courant, sont introduits dans une chambre d'hydrolyse à travers une chambre de filtration des gaz à la partie supérieure gauche du four par un conduit muni d'un injecteur 1. Un conduit 2 sert à l'introduction des gaz de pyrolyse et de réduction d'$UO_2F_2$ (vapeur d'eau pure ou diluée). Les gaz provenant de la réaction (HF, $H_2O$ en excès et éventuellement $H_2$) sortent de l'enceinte du four à travers des filtres 3 en métal fritté, à décolmatage automatique, qui évitent l'entraînement de $UO_2F_2$ dans la conduite 4 et retiennent les particules entraînées par les gaz de pyrolyse. Les filtres 3 sont supportés par un élément de fermeture 6 de la partie supérieure du four, cet élément étant traversé par le conduit 1. L'hexafluorure $UF_6$ étant transformé en $UO_2F_2$ dès la partie gauche du four, maintenue à une température de l'ordre de 180°C, $UO_2F_2$ est très rapidement soustrait à l'action de $UF_6$. La poudre d'$UO_2F_2$ est ensuite transformée en oxyde dans la zone de pyrohydrolyse qui est la partie représentée à l'horizontale sur la figure 1, où elle est entraînée par des moyens classiques, qui peuvent s'ajouter à la gravité si une pente suffisante est prévue. L'oxyde d'uranium en poudre est enfin extrait par une vanne rotative ou une vis sans fin 5. Grâce à la disposition ci-dessus, le temps de séjour d'$UO_2F_2$ dans la zone d'hydrolyse est très court, voisin de la seconde en général.

Les filtres peuvent être constitués de bougies filtrantes réparties en plusieurs secteurs. Il peut par exemple y avoir huit secteurs comportant chacun dix-sept bougies, ce qui permet d'avoir six secteurs en cours de fonctionnement, un secteur dont les bougies sont en cours de décolmatage et un secteur en attente de décolmatage.

Les filtres 3, comme il a été dit plus haut, retiennent $UO_2F_2$ qui se présente sous forme de poudre et évitent son entraînement dans la conduite 4. Les bougies constituant les filtres sont soumises à des contraintes thermiques relativement importantes du fait que la réaction d'hydrolyse de l'hexafluorure d'uranium par la vapeur d'eau est très exothermique d'une part, et que les gaz issus de la pyrohydrolyse sont à chaud (800 à 900°C) d'autre part. Le gaz HF libéré dans ces réactions est alors très chaud. Etant donné leur nombre (136 dans l'exemple donné ci-dessus), il existe le risque que l'une d'entre elles casse ou se détériore et que de l'oxyfluorure passe dans la conduite 4.

D'autre part, lors d'une remise en route du réacteur, les parois de la chambre d'hydrolyse et les parois de la chambre de filtration étant froides, les produits gazeux issus des réactions se condensent sur ces parois qui sont alors soumises à la corrosion.

Le brevet américain N° 4 518 569 divulgue un procédé de nettoyage physico-chimique des parois internes d'un réacteur pour empêcher qu'elles ne soient recouvertes d'une phase parasite qui se développe durant la réaction. Pour cela, un agent de protection est utilisé. L'agent de protection peut être déposé par condensation sur les parois avant, pendant ou après la réaction, puis est vaporisé.

**Exposé de l'invention**

La présente invention a été conçue pour apporter une solution à ces problèmes. Il est proposé un système de transfert de chaleur permettant, lorsque le réacteur fonctionne, de refroidir les parois de la chambre d'hydrolyse et de la chambre de filtration et permettant, à l'arrêt du réacteur, de réchauffer ces mêmes parois pour éviter que des liquides ou solutions corrosifs ne s'y déposent.

L'invention a donc pour objet l'utilisation d'un réacteur à lit fluidisé pour la conversion d'UF$_6$ en oxyde d'uranium, le réacteur comprenant une chambre d'hydrolyse raccordée à sa partie inférieure à une zone de pyrohydrolyse et, à sa partie supérieure, à une chambre de filtration des gaz de réaction, caractérisée en ce qu'au cours du fonctionnement du réacteur les parois de la chambre d'hydrolyse et les parois de la chambre de filtration sont refroidies afin d'y limiter la hausse de température provoquée par les gaz de réaction, et en ce que, lorsque le réacteur est arrêté, les parois de la chambre d'hydrolyse et les parois de la chambre de filtration sont réchauffées afin d'éviter la condensation des gaz de réaction sur ces parois. Avantageusement, le refroidissement et le réchauffement des parois sont assurés par un fluide caloporteur fourni par un échangeur de chaleur. Ce fluide caloporteur peut être de l'air.

L'invention a aussi pour objet un système de transfert de chaleur pour réacteur à lit fluidisé destiné à la conversion d'UF$_6$ en oxyde d'uranium, le réacteur comprenant une chambre d'hydrolyse raccordée à sa partie inférieure à une zone de pyrohydrolyse et, à sa partie supérieure, à une chambre de filtration des gaz de réaction, les parois de la chambre d'hydrolyse et les parois de la chambre de filtration étant pourvues de moyens permettant un transfert de chaleur de ces parois ou à ces parois.

L'invention a encore pour objet un réacteur à lit fluidisé pour la conversion d'UF$_6$ en oxyde d'uranium, comprenant une chambre d'hydrolyse raccordée à sa partie inférieure à une zone de pyrohydrolyse et, à sa partie supérieure, à une chambre de filtration des gaz de réaction,caractérisé en ce que les parois de la chambre d'hydrolyse et les parois de la chambre de filtration sont pourvues de moyens permettant un transfert de chaleur de ces parois ou à ces parois. De préférence, lesdits moyens permettant un transfert de chaleur sont constitués de moyens de circulation d'un fluide caloporteur. Ces moyens de circulation d'un fluide caloporteur peuvent notamment inclure des parois creuses de la chambre d'hydrolyse et de la chambre de filtration.

**Brève description des dessins**

L'invention sera mieux comprise et d'autres avantages et particularités apparaîtront à la lecture de la description qui va suivre, donnée à titre d'exemple non limitatif, accompagnée des figures annexées parmi lesquelles :

- la figure 1, déjà décrite, montre très schématiquement un dispositif selon l'art connu, destiné à mettre en oeuvre un procédé de fabrication d'oxyde d'uranium à partir d'UF$_6$,
- la figure 2 illustre un système de transfert de chaleur pour réacteur de conversion d'UF$_6$ en oxyde d'uranium, selon l'invention.

**Description détaillée d'un mode de réalisation de l'invention**

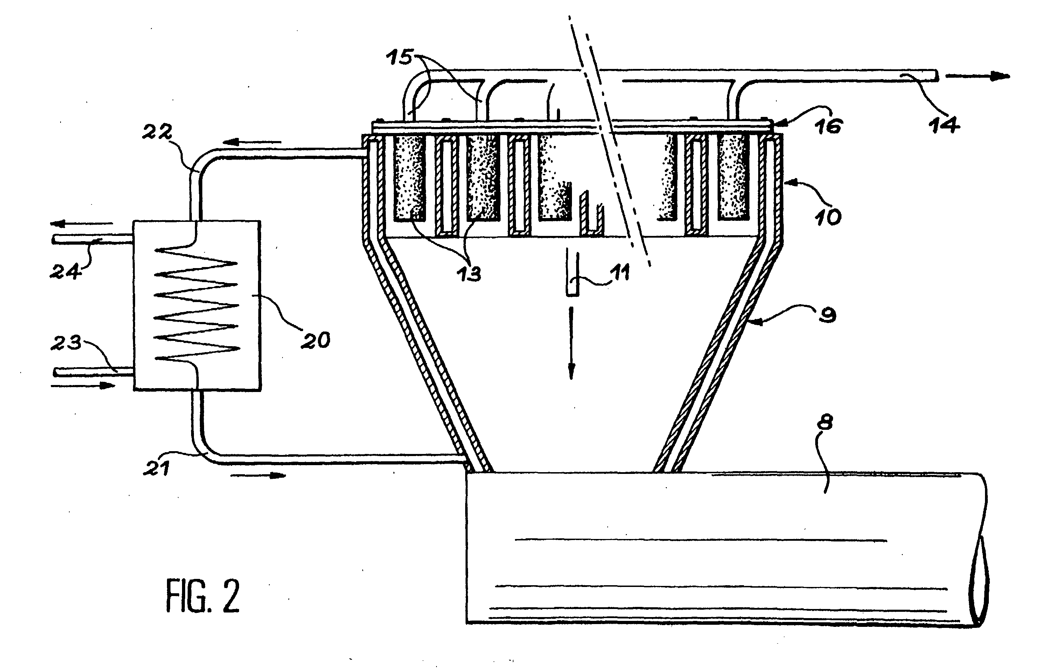

Par souci de simplification et de clarté, on n'a représenté sur la figure 2 que la partie du four correspondant à la partie gauche de la figure 1, c'est-à-dire celle qui comporte le système de transfert de chaleur selon l'invention. Seules la chambre d'hydrolyse et la chambre de filtration ont été représentées en coupe.

Sur la figure 2, on reconnaît la chambre d'hydrolyse 9 dont l'extrémité inférieure est raccordée à la zone de pyrohydrolyse 8 et dont l'extrémité supérieure est raccordée à la chambre de filtration 10. La chambre de filtration 10 est divisée en un certain nombre de secteurs, chaque secteur comportant un élément de filtration 13. La face supérieure de la chambre de filtration est fermée par un élément de fermeture 16 qui est percé de trous pour permettre le passage du conduit 11, permettant l'injection d'UF$_6$ dans la chambre d'hydrolyse 9, et le passage de conduits 15 d'évacuation des gaz de réaction. Ces conduits 15 sont raccordés à une conduite générale 14. Une étanchéité est assurée pour chaque élément de fermeture ou passage de conduit.

Comme cela est visible sur la figure 2, les parois de la chambre d'hydrolyse 9 et de la chambre de filtration 10 divisée en secteurs sont creuses et en communication de fluide entre elles. Ces parois creuses sont branchées à une conduite d'arrivée de fluide 21 et à une conduite d'évacuation de fluide 22 destinées à véhiculer un fluide caloporteur fourni par un échangeur de chaleur 20.

L'échangeur de chaleur 20 est alimenté par un fluide primaire véhiculé par les conduites 23 et 24. Ce fluide primaire baigne un tube en forme de serpentin dont une première extrémité est raccordée à la conduite 22 et une deuxième extrémité à la conduite 21. Un échange de chaleur se produit donc entre le fluide primaire véhiculé par les conduites 23 et 24 et le fluide caloporteur (ou fluide secondaire) véhiculé par les conduites 21 et 22.

Si l'on désire refroidir les parois de la chambre d'hydrolyse 9 et les parois de la chambre de filtration 10, le fluide primaire introduit dans l'échangeur de chaleur 20 est un fluide froid. Au contraire, si l'on désire réchauffer ces parois, le fluide primaire est un fluide chaud.

Avantageusement, le fluide primaire peut être de l'eau et le fluide secondaire de l'air. L'air présente une grande facilité de mise en oeuvre et permet aussi de détecter assez facilement les fuites d'HF. Un détecteur de fuite d'HF peut alors être branché sur l'une des conduites 21 ou 22.

La présente invention présente un certain nombre d'avantages. Elle présente une grande souplesse d'utilisation puisque les parois des chambres d'hydrolyse et de filtration peuvent être réchauffées ou refroidies à partir d'un dispositif unique qui est constitué par l'échangeur de chaleur. Le fait de refroidir ces parois pendant le fonctionnement du four augmente la durée de vie des éléments de filtration qui sont soumis à des contraintes thermiques de moindre importance. La température des gaz de réacteur étant ainsi abaissée, le volume gazeux à filtrer est plus faible et il est possible de diminuer le nombre d'éléments de filtration. Ainsi, si chaque élément de filtration comporte dix-sept bougies filtrantes, un réacteur équipé du système de transfert de chaleur selon l'invention n'a besoin que de sept éléments de filtration (sept secteurs) au lieu de huit pour un réacteur non équipé d'un tel système.

## Revendications

1. Utilisation d'un réacteur à lit fluidisé pour la conversion d'UF$_6$ en oxyde d'uranium, le réacteur comprenant une chambre d'hydrolyse (9) raccordée à sa partie inférieure à une zone de pyrohydrolyse (8) et, à sa partie supérieure, à une chambre de filtration des gaz de réaction (10), **caractérisée en ce qu'**au cours du fonctionnement du réacteur les parois de la chambre d'hydrolyse (9) et les parois de la chambre de filtration (10) sont refroidies afin d'y limiter la hausse de température provoquée par les gaz de réaction, et **en ce que**, lorsque le réacteur est arrêté; les parois de la chambre d'hydrolyse (9) et les parois de la chambre de filtration (10) sont réchauffées afin d'éviter la condensation des gaz de réaction sur ces parois.

2. Utilisation selon la revendication 1, **caractérisée en ce que** le refroidissement et le réchauffement des parois sont assurés par un fluide caloporteur fourni par un échangeur de chaleur.

3. Utilisation selon la revendication 2, **caractérisée en ce que** le fluide caloporteur est de l'air.

4. Utilisation selon l'une des revendications 2 ou 3, **caractérisée en ce que** l'on effectue des mesures sur le fluide caloporteur afin de détecter d'éventuelles fuites de gaz de réaction.

5. Système de transfert de chaleur pour réacteur à lit fluidisé destiné à la conversion d'UF$_6$ en oxydé d'uranium, le réacteur comprenant une chambre d'hydrolyse (9) raccordée à sa partie inférieure à une zone de pyrohydrolyse et, à sa partie supérieure, à une chambre de filtration des gaz de réaction (10), les parois de la chambre d'hydrolyse (9) et les parois de la chambre de filtration (10) étant pourvues de moyens permettant un transfert de chaleur de ces parois ou à ces parois.

6. Système de transfert de chaleur selon la revendication 5, **caractérisé en ce que** lesdits moyens permettant un transfert de chaleur comportent des moyens pour faire circuler un fluide caloporteur fourni par un échangeur de chaleur.

7. Système de transfert de chaleur selon la revendication 6, **caractérisé en ce que** lesdits moyens pour faire circuler un fluide caloporteur incluent des parois creuses de la chambre d'hydrolyse (9) et de la chambre de filtration (10).

8. Système de transfert de chaleur selon l'une des revendications 6 ou 7, **caractérisé en ce que** le fluide caloporteur est de l'air.

9. Système de transfert de chaleur selon l'une quelconque des revendications 6 à 8, **caractérisé en ce qu'**il comporte en outre des moyens de mesure placés dans le circuit du fluide caloporteur pour détecter d'éventuelles fuites de gaz de réaction.

10. Réacteur à lit fluidisé pour la conversion d'UF$_6$ en oxyde d'uranium, comprenant une chambre d'hydrolyse (9) raccordée à sa partie inférieure à une zone de pyrohydrolyse et, à sa partie supérieure, à une chambre de filtration des gaz de réaction (10), **caractérisé en ce que** les parois de la chambre d'hydrolyse (9) et les parois de la chambre de filtration (10) sont pourvues de moyens permettant un transfert de chaleur de ces parois ou à ces parois.

11. Réacteur selon la revendication 10, **caractérisé en ce que** lesdits moyens permettant un transfert de chaleur sont constitués de moyens de circulation d'un fluide caloporteur.

12. Réacteur selon la revendication 11, **caractérisé en ce que** les moyens de circulation d'un fluide caloporteur incluent des parois creuses de la chambre d'hydrolyse (9) et de la chambre de filtration (10).

## Patentansprüche

1. Verwendung eines Wirbelbettreaktors zur Umwandlung von UF$_6$ in Uranoxyd, wobei der Reaktor eine Hydrolysekammer (9) umfaßt, die in ihrem unteren Bereich mit einer Pyrohydrolysezone (8) und in ihrem oberen Bereich mit einer Kammer zur Filtration von Reaktionsgasen (10) verbunden ist, **dadurch gekennzeichnet, daß** im Verlauf des Betriebs des Reaktors die Wände der Hydrolysekammer (9) und die Wände der Filtrationskammer (10) gekühlt werden, um dort den durch die Reaktionsgase verursachten Temperaturanstieg zu begrenzen, und daß dann, wenn der Reaktor angehalten ist, die Wänder der Hydrolysekammer (9) und die Wände der Filtrationskammer (10) geheizt werden, um die Kondensation der Reaktionsgase an diesen Wänden zu vermeiden.

2. Verwendung nach Anspruch 1, **dadurch gekennzeichnet, daß** das Kühlen und das Heizen der Wände durch ein Wärmeleitfluid sichergestellt wird, welches von einem Wärmetauscher geliefert wird.

3. Verwendung nach Anspruch 2, **dadurch gekennzeichnet, daß** das Wärmeleitfluid Luft ist.

4. Verwendung nach einem der Ansprüche 2 oder 3, **dadurch gekennzeichnet, daß** man Messungen am Wärmeleitfluid durchführt, um eventuelle Reaktionsgaslecks zu erfassen.

5. Wärmeübertragungssystem für einen zur Umwandlung von UF$_6$ in Uranoxyd bestimmten Wirbelbettreaktor, wobei der Reaktor eine Hydrolysekammer (9) umfaßt, die in ihrem unteren Bereich mit einer Pyrohydrolysezone und in ihrem oberen Bereich mit einer Kammer zur Filtration von Reaktionsgasen (10) verbunden ist, wobei die Wände der Hydrolysekammer (9) und die Wände der Filtrationskammer (10) mit einer Einrichtung versehen sind, die eine Wärmeübertragung von diesen Wänden weg oder zu diesen Wänden hin erlaubt.

6. Wärmeübertragungssystem nach Anspruch 5, **dadurch gekennzeichnet, daß** die Einrichtung, die eine Wärmeübertragung erlaubt, eine Einrichtung zum Zirkulierenlassen eines von einem Wärmetauscher gelieferten Wärmeleitfluids umfaßt.

7. Wärmeübertragungssystem nach Anspruch 6, **dadurch gekennzeichnet, daß** die Einrichtung zum Zirkulierenlassen eines Wärmeleitfluids Hohlwände der Hydrolysekammer (9) und der Filtrationskammer (10) umfaßt.

8. Wärmeübertragurigssystem nach einem der Ansprüche 6 oder 7, **dadurch gekennzeichnet; daß** das Wärmeleitfluid Luft ist.

9. Wärmeübertragungssystem nach einem der Ansprüche 6 bis 8, **dadurch gekennzeichnet, daß** es femer eine im Wärmeleitfluidkreis angeordnete Meßeinrichtung zum Erfassen eventueller Reaktionsgaslecks umfaßt.

10. Wirbelbettreaktor zur Umwandlung von UF$_6$ in Uranoxyd, umfassend eine Hydrolysekammer (9), die in ihrem unteren Bereich mit einer Pyrohydrolysezone und in ihrem oberen Bereich mit einer Kammer zur Filtration von Reaktionsgasen (10) verbunden ist, **dadurch gekennzeichnet, daß** die Wände der Hydrolysekammer (9) und die Wände der Filtrationskammer (10) mit einer Einrichtung versehen sind, die eine Wärmeübertragung von diesen Wänden weg oder zu diesen Wänden hin erlaubt.

11. Reaktor nach Anspruch 10, **dadurch gekennzeichnet, daß** die Einrichtung, die eine Wärmeübertragung erlaubt, durch eine Wärmeleitfluidzirkulationseinrichtung gebildet ist.

12. Reaktor nach Anspruch 11, **dadurch gekennzeichnet, daß** die Wärmeleitfluidzirkulationseinrichtung Hohlwände der Hydrolysekammer (9) und der Filtrationskammer (10) umfaßt.

**Claims**

1. Use of a fluidized bed reactor for the conversion of UF$_6$ into uranium oxide, the reactor comprising a hydrolysis chamber (9) connected at its lower part to a pyrohydrolysis zone (8) and, at its upper part to a chamber (10) for the filtration of the reaction gases, **characterized in that** during operation of the reactor, the walls of the hydrolysis chamber (9) and the walls of the filtration chamber (10) are cooled so as to limit there the rise in temperature caused by the reaction gases, and **in that** when the reactor is shutdown, the walls of the hydrolysis chamber (9) and the walls of the filtration chamber (10) are heated so as to prevent the condensation of the reaction gases onto these walls.

2. Use according to claim 1, **characterized in that** cooling and heating of the walls are provided by a heat transfer fluid supplied through a heat exchanger.

3. Use according to claim 2, **characterized in that** the heat transfer fluid is air.

4. Use according to one of claims 2 or 3, **characterized in that** measurements are performed on the heat transfer fluid in order to detect any possible leaks of reaction gases.

5. System of heat transfer for a fluidized bed reactor intended for the conversion of UF$_6$ into uranium oxide, the reactor comprising a hydrolysis chamber (9) connected at its lower part to a pyrohydrolysis zone and, at its upper part to a chamber (10) for the filtration of the reaction gases, the walls of the hydrolysis chamber (9) and the walls of the filtration chamber (10) being provided with means that permit heat transfer from these walls or to these walls.

**6.** System of heat transfer according to claim 5, **characterized in that** said means that permit heat transfer comprise means for circulating a heat transfer fluid supplied through a heat exchanger.

**7.** System of heat transfer according to claim 6, **characterized in that** said means for circulating a heat transfer fluid include hollow walls for the hydrolysis chamber (9) and the filtration chamber (10).

**8.** System of heat transfer according to one of claims 6 or 7, **characterized in that** the heat transfer fluid is air.

**9.** System of heat transfer according to any one of claims 6 to 8, **characterized in that** it additionally comprises measurement means placed in the heat transfer fluid circuit to detect any possible leaks of reaction gases.

**10.** Fluidized bed reactor for the conversion of $UF_6$ into uranium oxide, comprising a hydrolysis chamber (9) connected at its lower part to a pyrohydrolysis zone and, at its upper part, to a chamber (10) for the filtration of the reaction gases, **characterized in that** the walls of the hydrolysis chamber (9) and the walls of the filtration chamber (10) are provided with means that allow heat transfer from these walls or to these walls.

**11.** Reactor according to claim 10, **characterized in that** said means that permit heat transfer are constituted by means of circulating a heat transfer fluid.

**12.** Reactor according to claim 11, **characterized in that** the means of circulating a heat transfer fluid include hollow walls for the hydrolysis chamber (9) and the filtration chamber (10).

FIG.1

FIG. 2